# EUROPÄISCHE PATENTANMELDUNG

(11) **EP 1 238 869 A1**
(43) Veröffentlichungstag der Anmeldung: **11.09.2002**
(21) Anmeldenummer: 02003414.6
(22) Anmeldetag: 14.02.2002
(51) Int. Cl.: B60R 21/20

(54) **Gasgenerator für einen Airbag am Lenkrad eines Kraftfahrzeuges**

(30) Priorität: 05.03.2001 DE 10110534
(71) Anmelder: Carl Freudenberg KG, 69469 Weinheim (DE)
(72) Erfinder: Leibach, Markus, 79410 Schweighof (DE); Back, Friedrich, 79379 Müllheim (DE); Dürre, Markus, 87477 Sulzberg (DE); Berg, Thilo, 67578 Gimbsheim (DE)

(57) **Zusammenfassung**

Gasgenerator für einen Airbag am Lenkrad eines Kraftfahrzeugs mit einem Behälter (3) zur Aufnahme einer Treibstofffüllung, wobei der Gasgenerator als Schwingungstilger ausgebildet ist und der Behälter (3) über ein gasundurchlässiges, die Form eines hohlen Kegelstumpfes aufweisenden Federelementes (1) aus polymerem Material und einem Befestigungsflansch (2) mit dem Lenkrad verbunden ist, wobei die Verbindung zwischen dem Federelement (1) und dem Behälter (3) und/oder dem Befestigungsflansch (2) als Klemmverbindung (4,5) ausgebildet ist.

## Beschreibung

### Technisches Gebiet

Die Erfindung betrifft einen Gasgenerator für einen Airbag am Lenkrad eines Kraftfahrzeuges mit einem Behälter zur Aufnahme einer Treibstofffüllung, wobei der Gasgenerator als Schwingungstilger ausgebildet ist und der Behälter über ein gasundurchlässiges, die Form eines hohlen Kegelstumpfes aufweisenden Federelements aus polymerem Material und einem Befestigungsflansch mit dem Lenkrad verbunden ist.

Die bei Kraftfahrzeugen während der Fahrt oder auch im Stillstand mit einem laufenden Motor auftretenden Schwingungen können sich auf die Lenksäule und von dort aus auf das Lenkrad übertragen. Um diesen Schwingungen am Lenkrad entgegenzuwirken und den Fahrkomfort zu verbessern sind Schwingungstilger bekannt geworden, bei denen der Gasgenerator als Schwingmasse verwendet wird.

### Stand der Technik

Durch das Gebrauchmuster DE 299 02 033 U1 ist ein Airbagmodul bekannt geworden bei dem ein Montagezylinder aus einem elastischen Werkstoff verwendet wird, dessen freie Ränder einerseits mit einem am Gasgeneratorträger angeordneten ringförmigen Montageblech und andererseits mit einem mit dem Gehäuse des Gasgenerators verbundenen umlaufenden Montageflansch verbunden sind. Hierdurch wird eine gute Abdichtung für die aus dem Gasgenerator austretenden Gase und ein vertretbares Schwingungsverhalten erreicht. Die Verbindung zwischen dem Montagezylinder und dem Montageblech beziehungsweise Montageflansch ist jedoch nicht zufriedenstellend. Es ist deshalb nicht auszuschließen, dass bei dieser Lösung Beschädigungen an den Verbindungsstellen auftreten können. Ein weiterer Nachteil besteht darin, dass keine nachträgliche Montage möglich ist.

In der älteren DE 100 566 25.1 wurde deshalb eine verbesserte Verbindungsmöglichkeit zwischen dem Behälter des Gasgenerators und dem Befestigungsflansch vorgeschlagen. Außerdem wurde das Federelement als kegelstumpfförmiges hohles Federelement ausgebildet, welches aufgrund seiner Formgestaltung ein verbessertes Schwingungsverhalten zeigt.

### Darstellung der Erfindung

Der Erfindung liegt die Aufgabe zugrunde, eine sichere und einfach herstellbare Verbindungsmöglichkeit zwischen dem Federelement und dem Behälter beziehungsweise Befestigungsflansch zu finden. Daher soll die Funktion des Gasgenerators nicht beeinträchtigt werden.

Die Lösung der gestellten Aufgabe erfolgt bei einem Gasgenerator der eingangs genannten Gattung erfindungsgemäß dadurch, dass die Verbindung zwischen dem Federelement und dem Behälter und/oder dem Befestigungsflansch als Klemmverbindung ausgebildet ist. Durch diese Verbindung wird nicht nur sichergestellt, dass ein Ablösen zwischen Federelement und den Verbindungsteilen nicht auftreten kann, sondern es wird auch die Möglichkeit einer fertigungstechnisch einfach herstellbaren Einsatzmöglichkeit für den Gasgenerator in den Airbag geboten.

Die Ausgestaltung der Klemmverbindungen kann auf unterschiedliche Weise erfolgen. Eine günstige Möglichkeit sieht vor, dass das Filterrohr unterhalb der in seiner Wandung befindlichen Gasaustrittsöffnungen mit einem ringförmigen Klemmflansch versehen ist, der mit seinem unteren Rand durch Umbördeln den oberen Rand des Federelements erfasst und an den Behälter drückt. Dadurch wird eine sehr sichere und feste Verbindung zwischen dem Federelement und dem Behälter hergestellt. Der Klemmflansch kann durch Formschluss auf den Behälter aufgesetzt sein. Auch ist ein Verschweißen oder dergleichen ohne großen Aufwand möglich.
Es ist günstig, wenn der obere Rand des Federelements als Klemmwulst ausgebildet ist. Um bei größeren Schwingungsausschlägen das Anschlagen des Klemmflansches an einer Generatorabdeckung zu verhindern ist das Federelement unterhalb des Klemmwulstes mit Anschlagvorsprüngen vorzugsweise in Form eines Ringwulstes versehen, die radial über den Klemmflansch hervorstehen beziehungsweise hervorsteht.

Die Verbindung zwischen dem Federelement und dem Befestigungsflansch kann ebenfalls an die vorgegebenen Bedingungen angepasst werden. Es ist jedoch besonders günstig, wenn der Befestigungsflansch zweiteilig ausgebildet ist und der untere Rand des Federelements zwischen den beiden Teilen des Befestigungsflansches eingeklemmt wird. Dies kann beispielsweise während des Montagevorgangs des Gasgenerators im Airbaggehäuse vorgenommen werden. Zur Verstärkung der Befestigung kann der untere Rand des Federelements mit einem radial nach außen vorstehenden Klemmwulst versehen sein.

Bei besonders einfachen Ausführungsformen kann die Verbindung zwischen dem Federelement und dem Befestigungsflansch auch durch Vulkanisation hergestellt sein.

### Kurzbeschreibung der Zeichnung

In der Zeichnung sind zwei Ausführungsbeispiele für die Befestigung zwischen Federelement und Behälter dargestellt. Es zeigt:
- Fig.: 1 einen Behälter mit Federelement und Befestigungsflansch in der Seitenansicht teilweise im Schnitt
- Fig. 2: vergrößert einen Ausschnitt x aus Fig. 1
- Fig. 3: einen Behälter teilweise in der Seitenansicht und im Schnitt mit einer anderen Befestigungsart und der

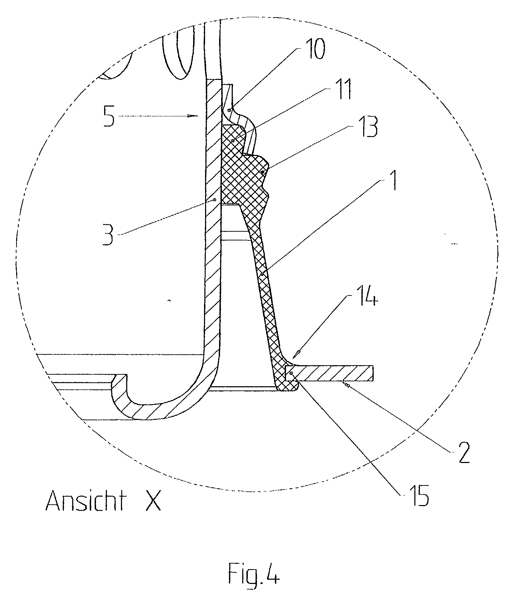

- Fig. 4: vergrößert den Ausschnitt x aus der Fig. 3.

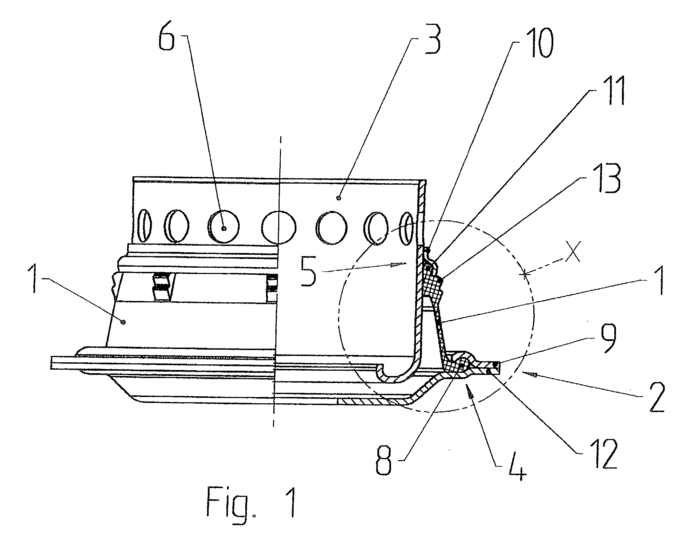

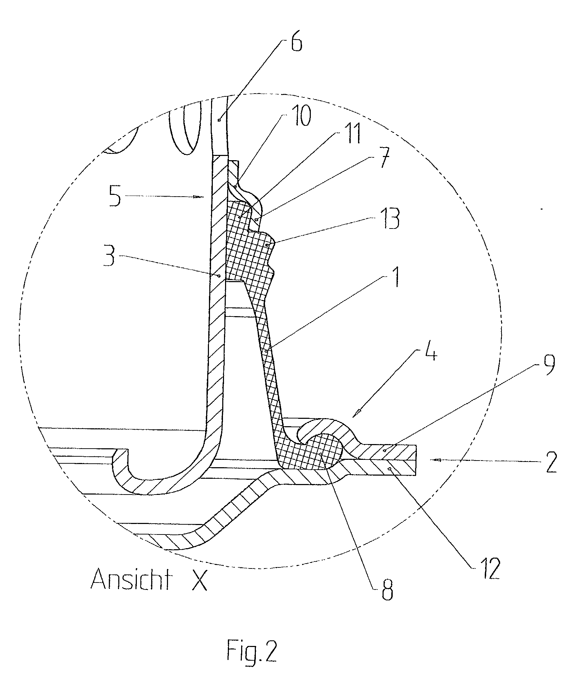

In der Fig. 1 ist das Federelement 1 mit dem Befestigungsflansch 2 und dem Behälter 3 über die Klemmverbindungen 4 und 5 verbunden. In den Behälter 3 wird der nicht näher gezeigte Gasgenerator eingesetzt. Auf der linken Seite der Fig. 1 ist das Federelement 1 mit dem Befestigungsflansch 2 und Behälter 3 in der Seitenansicht gezeigt. Die rechte Seite der Figur stellt einen Schnitt durch die genannten Teile dar. In der Figur 2 ist der Ausschnitt x vergrößert dargestellt. An dem Behälter 3 ist unterhalb der in seiner Wandung befindlichen Gasdurchtrittsöffnung 6 der ringförmige Klemmflansch 10 vorgesehen. Dieser Klemmflansch 10 ergreift mit seinem unteren Rand 7 den oberen Rand 11 des Federelements 1. Der Rand 11 wird durch Umbördeln des unteren Randes 7 des Klemmflansches 10 an den Behälter 3 gedrückt. Zur guten Absicherung ist der obere Rand 11 des Federelements als umlaufender Klemmwulst ausgebildet. Unterhalb dieses Klemmwulstes ist das Federelement 1 mit den Anschlagvorsprüngen 13 versehen. Diese Vorsprünge 13 bestehen aus einem Ringwulst, der radial nach außen über den Klemmflansch 10 hervorsteht. Gegebenenfalls kann dieser Ringwulst 13 unterbrochen sein, so dass gleichmäßig auf den Umfang des Federelements 1 verteilt die Anschlagvorsprünge 13 vorhanden sind. Die Klemmverbindung 4 zum Befestigungsflansch 2 hin wird durch eine zweiteilige Ausbildung des Befestigungsflansches 2 erreicht. Der untere Rand des Federelements 1 ist mit einem radial nach außen vorstehenden Klemmwulst 8 versehen, der zwischen die beiden Teile 9 und 12 des Befestigungsflansches 2 eingeklemmt wird. Federelement 1, Behälter 3 und Befestigungsflansch 2 können als Einheit vormontiert werden und dann in das Airbagmodul eingesetzt werden.

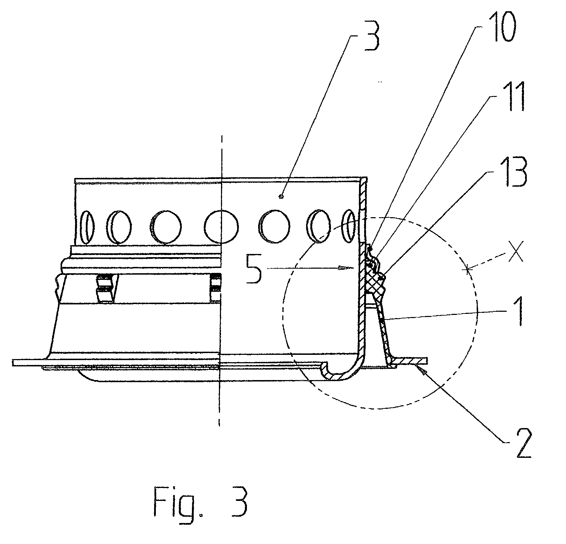

In der Figur 3 ist eine Ausführungsform gezeigt, bei der die Klemmverbindung 5 zwischen dem Federelement 1 und dem Behälter 3 in der gleichen Weise wie bei den Figuren 1 und 2 ausgebildet ist. Die Verbindung zwischen dem Federelement 1 und dem Befestigungsflansch 2 ist jedoch durch Vulkanisation hergestellt. Eine solche Lösung ist dann vorteilhaft, wenn wenig Raum unterhalb des Befestigungsflansches 2 zur Verfügung steht. Für die Befestigung des Federelements 1 mit dem Befestigungsflansch 2 ist das Federelement 1 an seinem unteren Rand mit einer nutartigen Rille 14 versehen, welche den Innenrand 15 des Befestigungsflansches 2 einfasst.

## Patentansprüche

1. Gasgenerator für einen Airbag am Lenkrad eines Kraftfahrzeugs mit einem Behälter zur Aufnahme einer Treibstofffüllung, wobei der Gasgenerator als Schwingungstilger ausgebildet ist und der Behälter über ein gasundurchlässiges, die Form eines hohlen Kegelstumpfes aufweisenden Federelementes aus polymerem Material und einem Befestigungsflansch mit dem Lenkrad verbunden ist, **dadurch gekennzeichnet, dass** die Verbindung zwischen dem Federelement (1) und dem Behälter (3) und/oder dem Befestigungsflansch (2) als Klemmverbindung (4, 5) ausgebildet ist.

2. Gasgenerator nach Anspruch 1, **dadurch gekennzeichnet, dass** der Behälter (3) unterhalb der in seiner Wandung befindlichen Gasdurchtrittsöffnungen (6) mit einem ringförmigen Ringflansch (10) versehen ist, der mit seinem unteren Rand (7) durch Umbördeln den oberen Rand (11) des Federelements (1) erfasst und an den Behälter (3) drückt.

3. Gasgenerator nach Anspruch 1 oder 2, **dadurch gekennzeichnet, dass** der obere Rand (11) des Federelements (1) als Klemmwulst ausgebildet ist.

4. Gasgenerator nach Anspruch 1 bis 3, **dadurch gekennzeichnet, dass** unterhalb des Klemmwulstes das Federelement (1) mit Anschlagvorsprüngen (13) vorzugsweise in Form eines Ringwulstes versehen ist, die radial über den Klemmflansch (10) hervorstehen beziehungsweise hervorsteht.

5. Gasgenerator nach Anspruch 1 bis 4, **dadurch gekennzeichnet, dass** der Befestigungsflansch (2) zweiteilig ausgebildet ist und dass der untere Rand des Federelements (1) zwischen den beiden Teilen (9, 12) des Befestigungsflansch (2) eingeklemmt ist.

6. Gasgenerator nach Anspruch 5, **dadurch gekennzeichnet, dass** der untere Rand des Federelements (1) mit einem vorzugsweise radial nach außen vorstehenden Klemmwulst (8) versehen ist.

7. Gasgenerator nach Anspruch 1 bis 4, **dadurch gekennzeichnet, dass** die Verbindung zwischen dem Federelement (1) und dem Befestigungsflansch (2) durch Vulkanisation hergestellt ist.

8. Gasgenerator nach Anspruch 7, **dadurch gekennzeichnet, dass** das Federelement (1) an seinem unteren Rand mit einer nutartigen Rille (14) versehen ist, die den Innenrand (15) des Befestigungsflansches (2) einfasst.
